# FASCICULE DE BREVET EUROPEEN

(11) **EP 3 092 672 B1**
(45) Date de publication et mention de la délivrance du brevet: **18.10.2017**
(21) Numéro de dépôt: 15702522.2
(22) Date de dépôt: 06.01.2015
(51) Int. Cl.: H01M 8/0258, H01M 8/0265, H01M 8/0254, H01M 8/1004, H01M 8/241, H01M 8/0206

(54) **PLAQUE DE GUIDAGE D'ECOULEMENT POUR PILE A COMBUSTIBLE**
FLUSSLEITENDE PLATTE FÜR EINE BRENNSTOFFZELLE
FLOW-GUIDING PLATE FOR A FUEL CELL

(30) Priorité: 07.01.2014 FR 1450065
(43) Date de publication de la demande: 16.11.2016
(73) Titulaire: Commissariat à l'Energie Atomique et aux Energies Alternatives, 75015 Paris (FR)
(72) Inventeur: POIROT-CROUVEZIER, Jean-Philippe, F-38450 Saint Georges de Commiers (FR)
(74) Mandataire: GIE Innovation Competence Group
(86) Numéro de dépôt international: PCT/FR2015/050013
(87) Numéro de publication internationale: WO 2015/104492

(56) Documents cités:
- WO-A1-2009/067617
- US-A1- 2002 081 477
- US-A1- 2005 064 263
- US-A1- 2009 169 964
- US-A1- 2011 269 055
- US-A1- 2011 300 465

## Description

L'invention concerne les piles à combustible, et en particulier les piles à combustible comprenant une alternance de membranes échangeuses de protons et de plaques bipolaires.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Un combustible tel que du dihydrogène ou du méthanol est utilisé comme carburant de la pile à combustible.

Dans le cas du dihydrogène, celui-ci est oxydé et ionisé sur une électrode de la pile et un comburant est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, fonctionnent à basse température et présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider les réactifs et les produits vers/depuis la membrane, pour guider du liquide de refroidissement, et pour séparer différents compartiments. Les plaques bipolaires sont également électriquement conductrices pour former des collecteurs des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

Les plaques bipolaires alimentent en continu les surfaces réactives des électrodes en réactifs, au fur et à mesure de leur consommation. La distribution des réactifs aux électrodes doit être la plus homogène possible sur toute leur surface. Les plaques bipolaires comportent des réseaux de canaux d'écoulement assurant la distribution des réactifs. Un réseau de canaux d'écoulement est dédié au fluide anodique, et un réseau de canaux d'écoulement est dédié au fluide cathodique. Les réseaux de canaux d'écoulement anodiques et cathodiques ne sont jamais en communication à l'intérieur de la pile, afin d'éviter la combustion directe du carburant et du comburant. Les produits de réactions et les espèces non réactives sont évacués par entraînement par l'écoulement jusqu'à la sortie des réseaux de canaux de distribution. Dans la plupart des architectures rencontrées, les plaques bipolaires comportent des canaux d'écoulement traversés pour du fluide de refroidissement, permettant l'évacuation de la chaleur produite.

On distingue principalement trois modes de circulation des réactifs dans les canaux d'écoulement:
- les canaux en serpentin: un ou plusieurs canaux parcourent l'ensemble de la surface active en plusieurs allers-retours.
- les canaux parallèles: un faisceau de canaux parallèles et traversants parcourt la surface active de part en part.
- les canaux interdigités: un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Les canaux d'écoulement peuvent être rectilignes ou légèrement ondulés.

Les matériaux les plus couramment utilisés pour les plaques bipolaires sont le composite carbone-polymère et le métal embouti.

Le métal embouti s'avère une solution favorisant l'allègement et la compacité des piles. Les plaques bipolaires utilisent alors des tôles métalliques minces, par exemple en acier inoxydable. Les canaux d'écoulement sont obtenus par emboutissage. Le plus fréquemment, on utilise une première plaque d'écoulement sous forme d'une première tôle emboutie définissant le canal d'écoulement anodique et une deuxième plaque d'écoulement sous forme d'une seconde tôle emboutie définissant le canal d'écoulement cathodique. Ces deux tôles des plaques d'écoulement sont assemblées dos à dos par soudage pour former une plaque bipolaire. Un canal d'écoulement du fluide de refroidissement est ménagé dans l'espace entre les tôles. Le document US 2011/269055 décrit des plaques de guidage, pouvant être fabriquées en tôle par estampage, dans lesquelles certains canaux ne possèdent ni d'orifices d'entrée ni de sortie. Le but étant de promouvoir une meilleure circulation des réactifs au contact des électrodes. Le document US 2009/169964 A1 décrit des plaque de guidage en tôle estampée comprenant des parties plates définissant des orifices d'accès aux canaux de la première face et de la deuxième face. Le but étant de faciliter l'introduction des fluides dans les canaux de la première et deuxième faces, et ainsi diminuer les différences de pression. Le document US 2002/081477 A1 décrit une plaque de guidage en tôle estampée dans laquelle il est possible de définir des circuits fluidiques, qui sont différents sur les deux faces de la plaque. Le but étant de tenir compte des différences (stoechiométrie, viscosité, etc...) des différents fluides circulant en contact avec la plaque. La technologie composite carbone-polymère permet une plus grande souplesse de conception des canaux d'écoulement par moulage de plaques plus épaisses.

Le document FR2973583 propose de supprimer le canal de liquide de refroidissement dans une plaque bipolaire sur deux. Avec des plaques bipolaires en tôle métallique, la plaque bipolaire dépourvue de canal de liquide de refroidissement comprend une unique tôle emboutie, ce qui allège la pile à combustible. Les canaux d'écoulement cathodiques sont formés sur une première face de la tôle, tandis que les canaux d'écoulement anodiques sont formés sur l'autre face de la tôle.

La conception de ces canaux est alors étroitement liée, puisque la face anodique est le négatif de la face cathodique. Néanmoins, le dessin des canaux doit garantir que les écoulements dans les plaques bipolaires à une seule tôle sont similaires à ceux dans les plaques bipolaires à deux tôles, afin de ne pas créer un déséquilibre d'alimentation entre les différentes cellules. Par ailleurs, il est souhaitable qu'une même tôle puisse être utilisée indifféremment pour une plaque bipolaire à tôle unique ou pour former une plaque bipolaire à deux tôles.

Une contrainte de conception supplémentaire porte sur les pertes de charge dans les écoulements de réactifs, ces pertes de charge devant avoir un même ordre de grandeur à l'anode et à la cathode. Cette contrainte a une incidence sur les sections respectives des canaux d'écoulement de carburant et de comburant. Cette contrainte complexifie la conception d'une plaque bipolaire à une unique tôle.

Pour du dihydrogène utilisé comme carburant, la section de passage dans les canaux anodiques doit être plus faible que celle dans les canaux cathodiques afin d'obtenir une perte de charge du même ordre de grandeur. En effet le dihydrogène est moins visqueux que le comburant circulant à la cathode et son débit est plus faible.

Le débit molaire de dihydrogène consommé dans une cellule est égal à I/, I étant le courant électrique produit et F la constante de Faraday. Le débit molaire d'air consommé est quant à lui égal à 1.2*I/F.

Dans la pratique, les débits de carburant et comburant introduits dans les cellules sont toujours supérieurs aux débits consommés, selon un facteur de majoration. Pour le dihydrogène, le facteur de majoration est généralement compris entre 1 et 2.5. Pour l'air, le facteur de majoration est généralement compris entre 1.2 et 3, pour garantir une quantité d'oxygène suffisante en sortie. Ainsi, pour un courant I donné, le rapport entre les débits molaires d'air et de dihydrogène est au moins égal à 2, et le plus couramment compris entre 3 et 5.

La viscosité du dihydrogène humide est de l'ordre de 8*10⁻⁶ à 13*10⁻⁶ Pa.s, en fonction de la température et de la teneur en humidité. La viscosité de l'air humide est de l'ordre de 12*10⁻⁶ à 21*10⁻⁶ Pa.s.

Lorsque les canaux d'écoulement d'une plaque bipolaire sont identiques côté hydrogène et air, on obtient un rapport entre les pertes de charge pour l'air et pour le dihydrogène compris entre 2 et 10. Pour équilibrer les pertes de charges, il est souhaitable de réduire la section de passage des canaux d'écoulement de dihydrogène avec un rapport compris entre 2 et 10 par rapport à la section de passage des canaux de d'écoulement d'air.

Plusieurs alternatives sont connues pour réduire cette disproportion de pertes de charge, avec des inconvénients associés :
- augmenter la largeur des canaux d'écoulement cathodiques, en réalisant des canaux anodiques ayant la largeur la plus fine qu'il soit industriellement possible de réaliser. Ceci est en contradiction avec la recherche de l'efficacité optimale de conduction électronique dans la pile à combustible, qui est généralement obtenue en réduisant autant que possible la largeur des canaux d'écoulement ;
- réaliser moins de canaux d'écoulement à l'anode qu'à la cathode. La distance entre deux canaux anodiques augmente, de même que la largeur des dents séparant les canaux. Cette structure est inadaptée pour une plaque bipolaire à une seule tôle car la conduction électronique depuis les cathodes est alors fortement affectée ;
- diminuer la profondeur des canaux d'écoulement anodiques. Cette structure est inadaptée pour une plaque bipolaire à une seule tôle car les canaux anodiques et cathodiques ont automatiquement une même profondeur et sont donc affectés par cette diminution de profondeur.

L'invention vise à résoudre un ou plusieurs de ces inconvénients. L'invention vise notamment à permettre l'utilisation de mêmes tôles pour une plaque bipolaire à plaque d'écoulement unique et pour une plaque bipolaire à doubles plaques d'écoulement, sans disparités d'écoulement anodiques et cathodiques pour ces deux types de plaques bipolaires, et en favorisant une homogénéisation des pertes de charges entre les canaux anodiques et les canaux cathodiques. L'invention porte ainsi sur une plaque de guidage d'écoulement pour pile à combustible, telle que définie dans les revendications annexées.

L'invention porte en outre sur une pile à combustible telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible ;
- la figure 2 est une vue en perspective de canaux d'écoulement sur une première face d'un premier mode de réalisation d'une tôle métallique pour plaque d'écoulement de pile à combustible ;
- la figure 3 est une vue de dessus de la première face de la tôle métallique de la figure 2;
- la figure 4 est une vue en coupe transversale de la tôle métallique de la figure 2 au niveau d'orifices d'accès à des canaux d'écoulement ;
- la figure 5 est une vue en coupe transversale de la tôle métallique de la figure 2 dans sa partie médiane ;
- la figure 6 est une vue en coupe transversale de la tôle métallique de la figure 2 au niveau d'une deuxième extrémité des canaux d'écoulement ;
- les figures 7 et 8 sont des vues en perspective de la deuxième face de la tôle de la figure 2, au niveau d'orifices d'accès aux canaux d'écoulement ;
- la figure 9 est une vue en coupe transversale d'une pile à combustible incluant différentes plaques bipolaires formées à partir de tôles métalliques de la figure 2 ;
- les figures 10 à 13 illustrent différentes vues en coupe longitudinales de la pile à combustible de la figure 9 ;
- les figures 14 et 15 sont des vues en perspective de la première face de deuxième et troisième modes de réalisation de tôles métalliques ;
- la figure 16 est une vue en coupe transversale d'une variante du premier mode de réalisation d'une tôle métallique au niveau d'orifices d'accès aux canaux d'écoulement.

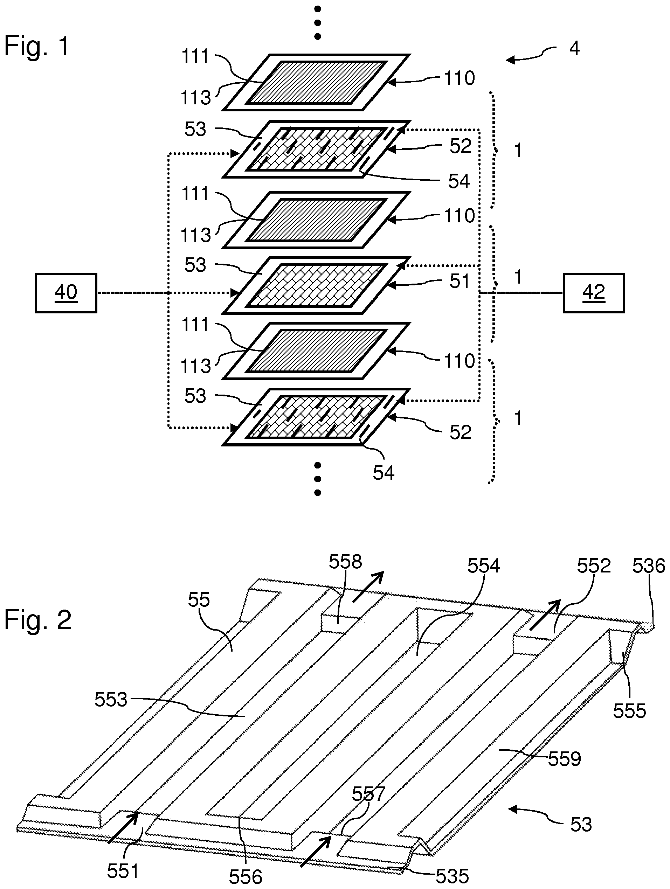

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Chaque cellule 1 présente également un circuit de refroidissement.

Chaque cellule 1 comprend un assemblage membrane/électrodes 110 ou AME 110. Un assemblage membrane/électrodes 110 comprend un électrolyte 113, une cathode 112 (non illustrée à la figure 1) et une anode 111 placées de part et d'autre de l'électrolyte et fixées sur cet électrolyte 113.

Entre chaque couple d'AME adjacents, une plaque bipolaire est disposée. La pile à combustible 4 comporte ici une alternance de plaques bipolaires 51 et 52.

Les plaques bipolaires 51 incluent une plaque d'écoulement formée d'une unique tôle ou feuille métallique 53. Dans une plaque bipolaire 51, le relief d'une première face de sa tôle métallique définit les canaux d'écoulement anodiques, et le relief d'une deuxième face de sa tôle métallique définit les canaux d'écoulement cathodiques.

Les plaques bipolaires 52 incluent deux plaques d'écoulement 53. Chacune de ces plaques d'écoulement 53 inclut une tôle ou feuille métallique. Les tôles sont superposées et fixées ensemble par l'intermédiaire de soudures 54. Dans une plaque bipolaire 52, le relief d'une face d'une première plaque d'écoulement 53 définit les canaux d'écoulement anodiques et le relief d'une face d'une plaque d'écoulement 53 définit les canaux d'écoulement cathodiques. Un canal d'écoulement de liquide de refroidissement est ménagé entre les tôles métalliques des plaques d'écoulement 53 d'une plaque bipolaire 52.

Les tôles métalliques formant les plaques d'écoulement 53 d'une plaque bipolaire 52 sont identiques. Les tôles métalliques formant les plaques d'écoulement 53 des plaques bipolaires 51 et 52 sont identiques. Ainsi, une même conception et un même procédé de fabrication peuvent être utilisés pour la fabrication des tôles métalliques des plaques d'écoulement 53 des plaques bipolaires 51 et 52. Les tôles métalliques sont par exemple formées en acier inoxydable, en alliage d'acier, en alliage de titane, en alliage d'aluminium, en alliage de nickel ou en alliage de tantale.

De façon connue en soi, durant le fonctionnement de la cellule 1 :
- du dihydrogène s'écoule dans un conduit d'écoulement anodique entre une plaque bipolaire et une anode 111 ;
- de l'air s'écoule dans un conduit d'écoulement cathodique entre une plaque bipolaire et une cathode 112.

Au niveau de l'anode 111, le dihydrogène est ionisé pour produire des protons qui traversent l'AME 110. Les électrons produits par cette réaction sont collectés par la plaque bipolaire disposée en face de cette anode 111. Les électrons produits sont ensuite appliqués sur une charge électrique connectée à la pile à combustible 4 pour former un courant électrique. Au niveau de la cathode 112, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre son anode et sa cathode de l'ordre de 1V. Le matériau catalyseur utilisé à l'anode 111 inclut avantageusement du platine, pour ses excellentes performances catalytiques.

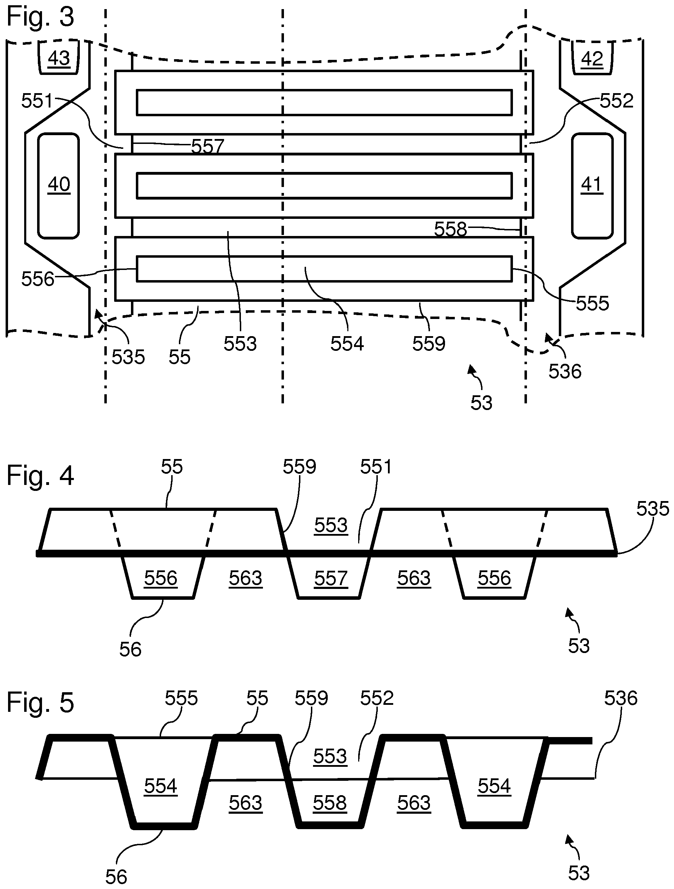

La figure 2 est une vue en perspective de canaux d'écoulement côté anodique d'un premier mode de réalisation d'une tôle conductrice d'une plaque de guidage d'écoulement 53 selon l'invention. La figure 3 est une vue de dessus de la plaque 53. Une telle plaque de guidage d'écoulement 53 peut être utilisée pour former différents types de plaques bipolaires, comme détaillé par la suite.

La plaque 53 comporte une première face 55 illustrée à la figure 2 et une deuxième face 56. Le relief de la plaque de guidage d'écoulement 53 définit une alternance de canaux d'écoulement sur les faces opposées 55 et 56. Ainsi, deux canaux d'écoulement successifs d'une même face de la plaque 53 sont séparés par des parois 559 de délimitation d'un canal d'écoulement de l'autre face. Les canaux d'écoulement des faces 55 et 56 s'étendent selon une même direction longitudinale. Dans cet exemple, les canaux d'écoulement sont sensiblement rectilignes.

Au niveau de la face 55, les canaux d'écoulement sont scindés en des premier et deuxième groupes.

Des orifices d'accès 551 débouchent dans des canaux d'écoulement 553 du premier groupe. Les orifices d'accès 551 sont disposés à une première extrémité des canaux d'écoulement 553. Une première partie plate 535 forme une surface de guidage d'écoulement s'étendant entre les différents orifices d'accès 551. Une paroi inclinée 557 forme une jonction entre un orifice d'accès 551 et la partie médiane de son canal d'écoulement 553.

À la deuxième extrémité des canaux d'écoulement 553, des orifices d'accès 552 débouchent dans les canaux d'écoulement 553 du premier groupe. Une deuxième partie plate 536 forme une surface de guidage d'écoulement s'étendant entre les différents orifices d'accès 552. Une paroi inclinée 558 forme une jonction entre les orifices d'accès 552 et la partie médiane de leur canal d'écoulement 553.

La section transversale de chaque canal d'écoulement 553 dans sa partie médiane, entre ses orifices d'accès 551 et 552, est supérieure à la section transversale au niveau des orifices d'accès 551 et 552. Les parois inclinées 557 et 558 s'étendent ainsi en profondeur jusqu'à un fond plat du canal d'écoulement 553. La partie médiane des canaux d'écoulement 553 est donc dépourvue de restriction d'écoulement.

Pour garantir des pertes de charge homogènes dans les différents canaux d'écoulement 553, ceux-ci présentent une même section transversale dans leur partie médiane.

La face 55 présente des canaux d'écoulement 554 du deuxième groupe. La face 55 comporte une alternance de canaux d'écoulement 553 et 554 selon une direction transversale. Dans le mode de réalisation illustré à la figure 2, les canaux d'écoulement 554 comportent une paroi 556 au niveau de leur première extrémité et une paroi 555 au niveau de leur deuxième extrémité. Chaque paroi 555 s'étend depuis le fond d'un canal d'écoulement 554 jusqu'au dessus de la partie plate 536. Chaque paroi 556 s'étend depuis le fond d'un canal d'écoulement 554 jusqu'au dessus de la partie plate 535. Ainsi, la section transversale des canaux d'écoulement 554 au niveau des parois 555 et 556 est inférieure à la section transversale des orifices d'accès 551 et 552 aux canaux d'écoulement du premier groupe. Chacune de ces parois 555 et 556 forme ainsi une restriction d'écoulement d'un canal d'écoulement 554. Chaque canal d'écoulement 554 comporte ainsi au moins une restriction d'écoulement. La section de passage d'une restriction d'écoulement est définie comme la section transversale du canal d'écoulement au niveau de cette restriction d'écoulement. Les parois 555 et 556 s'étendent ici jusqu'au sommet de leur canal d'écoulement 554 et jusqu'au fond des canaux d'écoulement 563 de la face 56 détaillés par la suite.

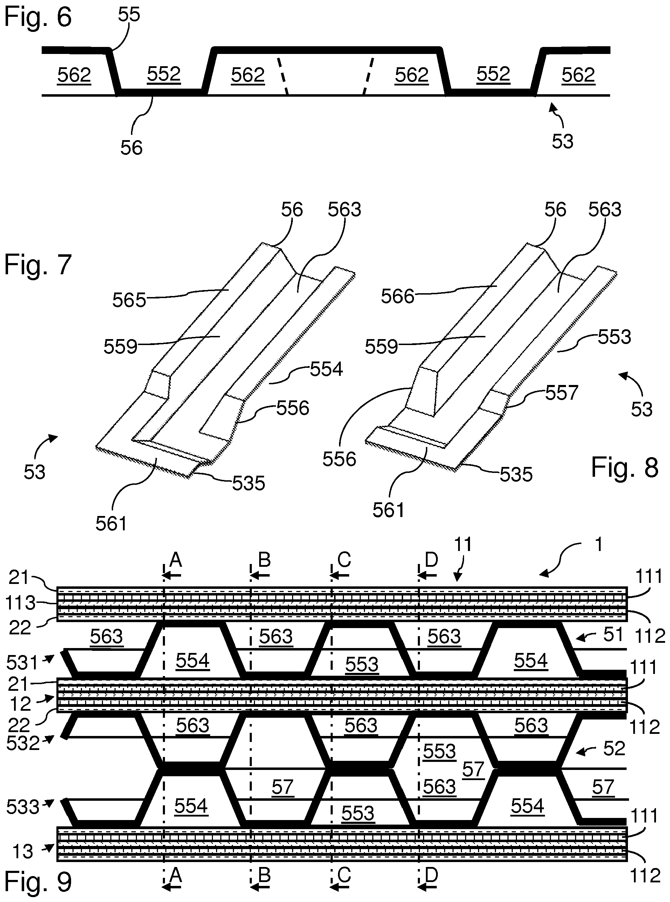

Le relief de la plaque de guidage d'écoulement 53 délimite des canaux d'écoulement 563 au niveau de la face 56. Les figures 7 et 8 illustrent en perspectives les premières extrémités de deux types d'orifices d'accès 561 aux canaux d'écoulement 563. Chaque canal d'écoulement 563 est délimité par rapport aux canaux d'écoulement 553 et 554 de la face 55 par l'intermédiaire de parois 559. Les canaux d'écoulement 553 et 554 comportent des parois de fond respectives 565 et 566 destinées à former par exemple des contacts de conduction cathodiques au niveau de la face 56.

Comme illustré sur ces figures, l'alternance des canaux d'écoulement 553 et 554 sur la face 55 aboutit à deux types de canaux d'écoulement 563 sur la face 56. La section transversale de chaque canal d'écoulement 563 dans sa partie médiane, entre les orifices d'accès à ses extrémités longitudinales, est supérieure à la section transversale au niveau de ces orifices d'accès. Des parois inclinées s'étendent ainsi en profondeur depuis un orifice d'accès jusqu'à un fond plat de leur canal d'écoulement 563. La partie médiane des canaux d'écoulement 563 est donc dépourvue de restriction d'écoulement.

On constate que du fait de l'alternance des canaux d'écoulement 553 et 554, les deux types de canaux d'écoulement 563 et de leurs orifices d'accès sont le symétrique l'un de l'autre par rapport à un plan longitudinal perpendiculaire par rapport au plan moyen de la plaque 53. Par conséquent, les pertes de charge à travers les deux types de canaux d'écoulement 563 seront rigoureusement identiques. Pour garantir des pertes de charge homogènes dans les différents canaux d'écoulement 563, ceux-ci présentent une même section transversale dans leur partie médiane.

Dans ce mode de réalisation, deux canaux d'écoulement 563 successifs sont en communication à chacune de leurs extrémités, du fait des passages formés pour aménager les parois 555 et 556 au niveau des orifices d'accès. Par conséquent, d'éventuelles dispersions de pertes de charge entre deux canaux 563 successifs peuvent être homogénéisées par une telle mise en communication.

La figure 4 est une vue en coupe transversale de la plaque 53 dans la partie plate 535. La figure 5 est une vue en coupe transversale de la plaque 53 dans la partie médiane des canaux d'écoulement. La figure 6 est une vue en coupe transversale de la plaque 53 au niveau des orifices d'accès 552.

La partie plate 535 s'étend entre les orifices d'accès de la première extrémité des canaux d'écoulement 563. La partie plate 535 forme ainsi un répartiteur entre les orifices d'accès aux canaux d'écoulement 563 au niveau de cette première extrémité.

La partie plate 536 s'étend entre les orifices d'accès de la deuxième extrémité des canaux d'écoulement 563. La partie plate 536 forme ainsi un répartiteur entre les orifices d'accès aux canaux d'écoulement 563 au niveau de cette deuxième extrémité.

Les parois 559 assurent une séparation entre les canaux d'écoulement des deux faces. Le fond d'un canal 563 est ainsi disposé au niveau du sommet d'un canal 553 ou 554, et vice versa. Les fonds des différents canaux d'écoulement sont destinés à former des surfaces conductrices pour collecter le courant électrique devant traverser les plaques de guidage 53.

Les orifices d'accès aux canaux d'écoulement 563 présentent une même section aux deux extrémités de ces canaux d'écoulement. Les orifices d'accès 562 de la deuxième extrémité des canaux d'écoulement 563 sont illustrés à la figure 6. Ces orifices d'accès 562 présentent ici une hauteur correspondant à la moitié de la hauteur des canaux 563. L'assemblage de deux plaques de guidage 53 dans un empilement de cellules de pile à combustible 4 est ainsi facilité.

La plaque 53 est ici formée d'une tôle métallique emboutie pour lui conférer un relief. La forme de la face 55 est donc le complémentaire ou le négatif de la forme de la face 56. La plaque 53 peut par exemple être réalisée par emboutissage d'une tôle métallique.

Dans cet exemple, les canaux d'écoulement 553 et 554 présentent une même section transversale sur au moins 75% de leur partie médiane. Ainsi, le fond des canaux d'écoulement 554 fournit une très grande surface pour collecter le cas échéant un courant cathodique.

Dans cet exemple, les canaux d'écoulement 553, 554 et 563 présentent une section transversale identique dans leur partie médiane. Par conséquent, ces canaux peuvent présenter la largeur minimale correspondant à leur technologie de formation, et ce afin d'optimiser l'homogénéité de répartition du courant à travers la plaque bipolaire à former. Par ailleurs, l'utilisation de mêmes sections transversales pour les canaux d'écoulement des deux faces facilite l'assemblage de deux plaques de guidage d'écoulement 53 pour former une plaque bipolaire.

Dans cet exemple, les parties plates 535 et 536 sont placées à une même hauteur et les canaux d'écoulement 553, 554 et 563 présentent une même profondeur par rapport à ces parties plates 535 et 536.

Dans l'exemple, les orifices d'accès 551 sont destinés à communiquer avec une ouverture 40 ménagée à travers la partie plate 535. Les orifices d'accès à la première extrémité des canaux d'écoulement 563 sont destinés à communiquer avec une ouverture 43 ménagée à travers la partie plate 535. Les ouvertures 40 et 43 sont destinées à être isolées l'une de l'autre par l'intermédiaire de joints, de façon connue en soi. Les orifices d'accès 552 sont destinés à communiquer avec une ouverture 41 ménagée à travers la partie plate 536. Les orifices d'accès 562 à la deuxième extrémité des canaux d'écoulement 563 sont destinés à communiquer avec une ouverture 42 ménagée à travers la partie plate 536. Les ouvertures 41 et 42 sont destinées à être isolées l'une de l'autre par l'intermédiaire de joints, de façon connue en soi.

La figure 9 est une vue en coupe transversale d'un exemple de pile à combustible 4 utilisant des plaques de guidage d'écoulement 53 telles que détaillées précédemment.

La pile à combustible 4 comporte des assemblages membrane/électrodes 11, 12 et 13. Chaque assemblage membrane/électrodes comporte ici une couche de diffusion gazeuse 21 placée en contact avec une anode 111. L'anode 111 est fixée sur une membrane échangeuse de protons 113. Une cathode 112 est fixée sur la membrane échangeuse de protons 113. Une couche de diffusion gazeuse 22 est placée en contact avec la cathode 112.

La pile à combustible 4 comporte en outre des plaques de guidage d'écoulement 531, 532 et 533 telles que détaillées en références aux figures 1 à 8. La plaque de guidage d'écoulement 531 forme ici à elle seule une plaque bipolaire 51 disposée entre l'assemblage membrane/électrodes 11 et l'assemblage membrane/électrodes 12.

La paroi de fond des canaux d'écoulement 563 est ici en contact avec la couche de diffusion gazeuse 21 de l'assemblage membrane/électrodes 12. La paroi de fond des canaux d'écoulement 553 et 554 est ici en contact avec la couche de diffusion gazeuse 22 de l'assemblage membrane/électrodes 11.

Les plaques de guidage d'écoulement 532 et 533 forment ici une plaque bipolaire 52 disposée entre l'assemblage membrane/électrodes 12 et l'assemblage membrane/électrodes 13. La paroi de fond des canaux d'écoulement 563 de la plaque 532 est ici placée en contact avec la paroi de fond 566 des canaux d'écoulement 554 de la plaque 533. La plaque 532 peut être fixée à la plaque 533 par l'intermédiaire de soudures (non illustrées) favorisant la conduction électrique entre les plaques 532 et 533.

Des circuits d'écoulement 57 sont ainsi formés entre les plaques 532 et 533 par l'association :
- des canaux d'écoulement 554 de la plaque 532 avec des canaux d'écoulement 563 de la plaque 533 ;
- des canaux d'écoulement 553 de la plaque 532 avec des canaux d'écoulement 563 de la plaque 533.

La paroi de fond des canaux d'écoulement 554 de la plaque 532 est ici en contact avec la couche de diffusion gazeuse 22 de l'assemblage membrane/électrodes 12. La paroi de fond des canaux d'écoulement 563 de la plaque 533 est ici en contact avec la couche de diffusion gazeuse 21 de l'assemblage membrane/électrodes 13.

On constate que l'utilisation de plaques 531 à 533 présentant la même géométrie permet de former deux types de plaques bipolaires 51 et 52 différents, tout en garantissant :
- des débits de carburant respectifs identiques à travers ces plaques bipolaires ;
- des débits de comburant respectifs identiques à travers ces plaques bipolaires.

La géométrie d'un objet est usuellement définie par la forme d'un objet ou par ses caractéristiques morphologiques.

Les canaux d'écoulement 563 de la plaque 531 sont destinés à être traversés par du comburant, par exemple de l'air. Les canaux d'écoulement 553 de la plaque 531 sont destinés à être traversés par du carburant, par exemple du dihydrogène. Les canaux d'écoulement 554 ne sont pas destinés à être traversés par un écoulement (ou alors de façon marginale par écoulement au travers des couches de diffusion) du fait de la présence de restrictions d'écoulement, et ce malgré une même section transversale des canaux d'écoulement 553 et 554 sur l'essentiel de leur partie médiane. Pour de mêmes conditions d'écoulement, la perte de charge à travers les canaux d'écoulement de la face 55 est supérieure à la perte de charge à travers les canaux d'écoulement de la face 56.

Ainsi, on peut homogénéiser les pertes de charge dans les écoulements de carburant et de comburant, et ce malgré des différences de débits molaires et des différences de viscosité des fluides dans ces canaux d'écoulement. Par ailleurs, la présence des parois 555 et 556 n'altère pas l'homogénéité de la répartition des fluides au niveau de la face 56.

Les canaux d'écoulement 563 de la plaque 532 sont destinés à être traversés par du comburant. Les canaux d'écoulement 553 de la plaque 533 sont destinés à être traversés par du carburant. Comme dans le cas précédent, les canaux d'écoulement 554 de la plaque 533 ne sont pas destinés à être traversés par du carburant, du fait de la présence de restrictions d'écoulement.

Les pertes de charge pour le carburant sont donc identiques pour les deux types de plaques bipolaires 51 et 52. Les pertes de charge pour le comburant sont également identiques pour les deux types de plaques bipolaires.

Dans les canaux d'écoulement de comburant, l'écoulement de gaz s'effectue entre une entrée et une sortie d'un même canal d'écoulement 563. L'écoulement est donc ici du type parallèle.

Dans les canaux d'écoulement de carburant, l'écoulement de gaz s'effectue entre une entrée et une sortie d'un même canal d'écoulement 553. L'écoulement est donc ici du type parallèle.

La plaque bipolaire formée des plaques 532 et 533 comporte un circuit d'écoulement 57 destiné à être traversé par du liquide de refroidissement. Afin d'alléger la plaque bipolaire formée de la plaque 531, celle-ci est dépourvue de circuit d'écoulement de liquide de refroidissement.

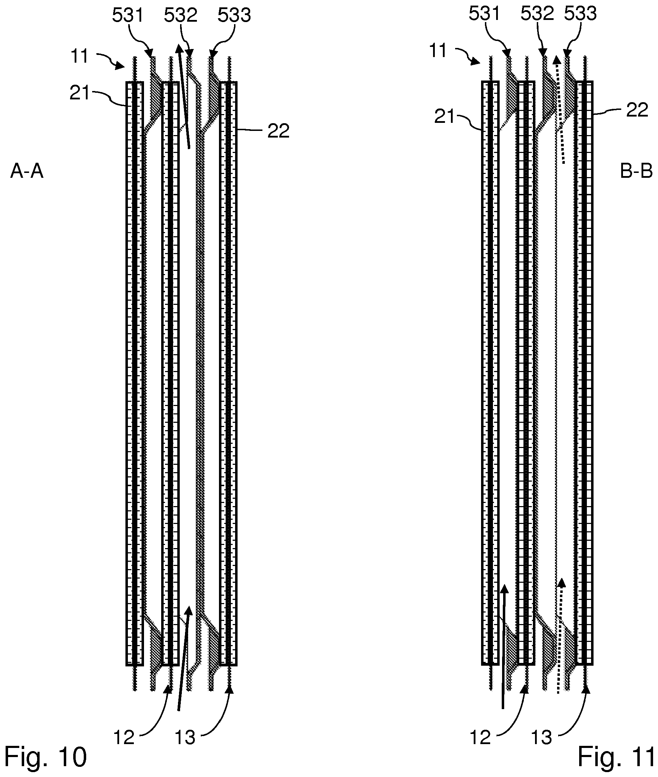

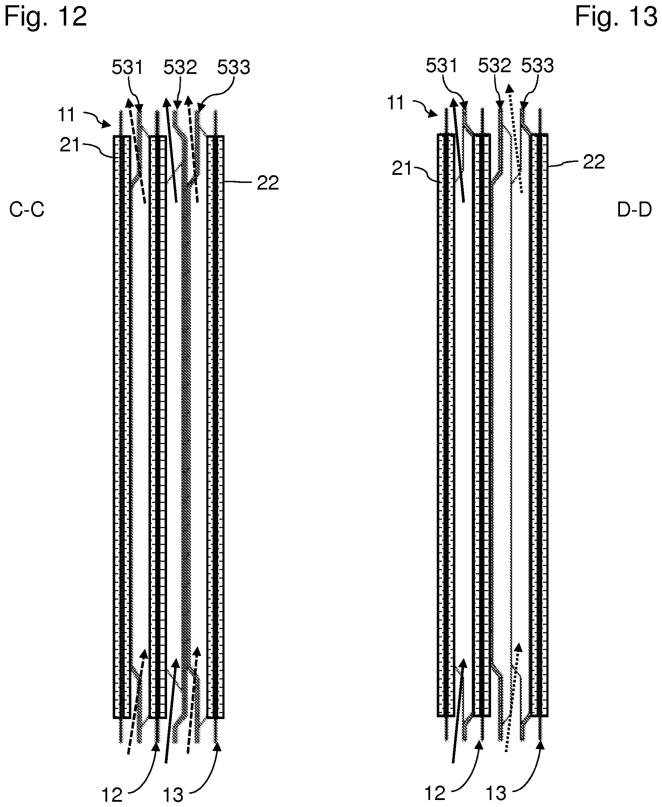

Les figures 10 à 13 sont des vues en coupe longitudinale permettant d'illustrer différents écoulement de fluides à travers les plaques bipolaires 51 et 52. Les écoulements en pointillés correspondent à des écoulements de liquide de refroidissement. Les écoulements en trait discontinu correspondent à des écoulements de carburant. Les écoulements en trait plein correspondent à des écoulements de comburant.

Afin de permettre la formation de plaques bipolaires 51 à plaque 53 unique et de plaques bipolaires 52 à doubles plaques 53, pour pouvoir utiliser une même géométrie de plaques 53, celles-ci présentent avantageusement un axe de symétrie. L'axe de symétrie est typiquement perpendiculaire à un plan médian de la plaque.

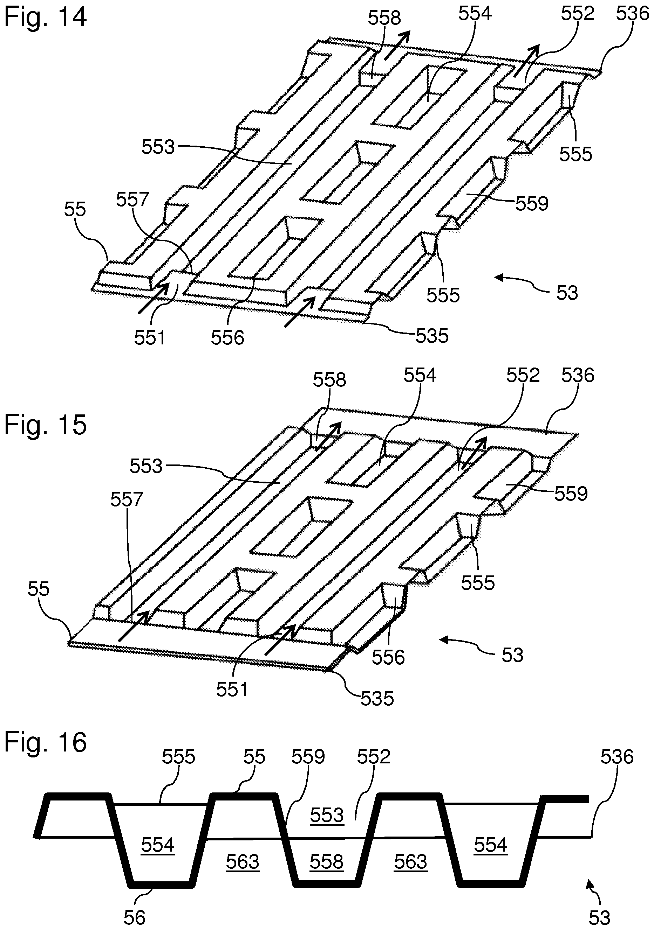

La figure 14 est une vue en perspective de canaux d'écoulement côté anodique d'un deuxième mode de réalisation d'une tôle conductrice d'une plaque de guidage d'écoulement 53 selon l'invention. Ce deuxième mode de réalisation se distingue du premier mode de réalisation par la présence de restrictions d'écoulement supplémentaires dans les canaux d'écoulement 554. Des parois additionnelles 555 sont ainsi aménagées pour obturer la partie médiane des canaux d'écoulement 554.

Dans ce mode de réalisation, deux canaux d'écoulement 563 successifs sont ainsi en communication au niveau de leurs parties médianes, du fait des passages formés pour aménager les parois 555 et 556. Par conséquent, d'éventuelles dispersions de pertes de charge entre deux canaux 563 successifs peuvent être davantage homogénéisées par une telle mise en communication.

La figure 15 est une vue en perspective de canaux d'écoulement côté anodique d'un troisième mode de réalisation d'une tôle conductrice d'une plaque de guidage d'écoulement 53 selon l'invention. Ce troisième mode de réalisation se distingue du second mode de réalisation par l'absence de restrictions d'écoulement aux extrémités des canaux d'écoulement 554. Des restrictions d'écoulement sont ici ménagées dans la partie médiane des canaux d'écoulement 554. Des parois additionnelles 555 sont ainsi aménagées pour obturer la partie médiane des canaux d'écoulement 554.

Dans ce mode de réalisation, deux canaux d'écoulement 563 successifs sont ainsi en communication au niveau de leurs parties médianes, du fait des passages formés pour aménager les parois 555 et 556. Par conséquent, d'éventuelles dispersions de pertes de charge entre deux canaux 563 successifs sont encore homogénéisées par une telle mise en communication.

La figure 16 est une vue en coupe d'une variante de plaque d'écoulement 53 au niveau d'une première extrémité de canaux d'écoulement. La plaque d'écoulement 53 diffère de celle de la variante des figures 1 à 8 par la géométrie des parois 555 et 556. Les parois 555 et 556 ne s'étendent pas jusqu'au sommet de leur canal d'écoulement 554 (ou ne s'étendent pas jusqu'au fond des canaux d'écoulement 563 interposés). Par conséquent, un écoulement peut traverser un canal d'écoulement 554 en surmontant les parois 555 et 556, mais avec des pertes de charge très supérieures aux pertes de charge à travers un canal d'écoulement 553. Avantageusement, les parois 555 et 556 s'étendent au moins jusqu'au trois-quarts de la profondeur des canaux d'écoulement 563 de la face 56.

Dans les exemples illustrés, les canaux d'écoulement présentent une forme rectiligne selon la direction longitudinale. On peut bien entendu prévoir d'autres géométries de canaux d'écoulement, par exemple des canaux d'écoulement présentant des ondulations le long de leur direction longitudinale.

## Revendications

1. Plaque de guidage d'écoulement (53) pour pile à combustible, **caractérisée en ce qu'**elle inclut une tôle conductrice comportant un relief :
- définissant une alternance de canaux d'écoulement sur des première et deuxième faces (55, 56) opposées de la tôle, deux canaux d'écoulement successifs (553, 554) de la première face (55) étant séparés par des parois (559) délimitant un canal d'écoulement (563) de la deuxième face (56), lesdits canaux d'écoulement des première et deuxième faces s'étendant selon une même direction longitudinale;
- définissant des premier et deuxième orifices d'accès respectivement aux première et deuxième extrémités de chacun des canaux d'écoulement (563) de la deuxième face (56) et d'un premier groupe de canaux d'écoulement (553) de la première face, la section transversale de chacun de ces canaux d'écoulement entre ses première et deuxième extrémités étant supérieure à la section transversale de ses premier et deuxième orifices d'accès;
- définissant une restriction d'écoulement (555, 556) dans chaque canal d'écoulement d'un deuxième groupe de canaux d'écoulement de la première face (55), la section transversale de passage au niveau de chacune de ces restrictions d'écoulement étant inférieure à la section transversale des orifices d'accès aux canaux d'écoulement du premier groupe, la première face (55) comportant une alternance de canaux d'écoulement du premier groupe (553) et de canaux d'écoulement du deuxième groupe (554).

2. Plaque de guidage d'écoulement (53) selon la revendication 1, dans laquelle chacune desdites restrictions d'écoulement (555, 556) s'étend au moins jusqu'aux trois quarts de la profondeur des canaux d'écoulement (563) de la deuxième face.

3. Plaque de guidage d'écoulement (53) selon la revendication 1 ou 2, dans laquelle chacune desdites restrictions d'écoulement (555, 556) inclut une paroi s'étendant jusqu'au fond des canaux d'écoulement (563) de la deuxième face (56).

4. Plaque de guidage d'écoulement (53) selon l'une quelconque des revendications précédentes, dans laquelle les canaux d'écoulement du premier groupe et de la deuxième face présentent une même section transversale dans leur partie médiane.

5. Plaque de guidage d'écoulement (53) selon l'une quelconque des revendications précédentes, dans laquelle les canaux d'écoulement du premier groupe et du deuxième groupe présentent une même profondeur sur au moins les trois quarts de leur longueur.

6. Plaque de guidage d'écoulement (53) selon l'une quelconque des revendications précédentes, dans laquelle chaque canal d'écoulement du deuxième groupe comporte une restriction d'écoulement délimitant un passage entre deux canaux d'écoulement de la deuxième face.

7. Plaque de guidage d'écoulement (53) selon l'une quelconque des revendications précédentes, dans laquelle la forme d'une face de la tôle est le complémentaire de la forme de l'autre face de la tôle.

8. Plaque de guidage d'écoulement (53) selon l'une quelconque des revendications précédentes, dans laquelle ladite tôle est une tôle d'alliage d'acier, d'alliage de titane, d'alliage d'aluminium, d'alliage de nickel ou d'alliage de tantale.

9. Plaque de guidage d'écoulement (53) selon l'une quelconque des revendications précédentes, dans laquelle la tôle comporte :
- une première partie plate (535) s'étendant entre les orifices d'accès de la première extrémité des canaux d'écoulement de la deuxième face et des canaux d'écoulement du premier groupe;
- une deuxième partie plate (536) s'étendant entre les orifices d'accès de la deuxième extrémité des canaux d'écoulement de la deuxième face et des canaux d'écoulement du premier groupe.

10. Plaque de guidage d'écoulement (53) selon la revendication 9, dans laquelle la première partie plate (535) comporte des première et deuxième ouvertures (40, 43) traversantes, et dans laquelle la deuxième partie plate (536) comporte des troisième et quatrième ouvertures traversantes (41, 42).

11. Plaque de guidage d'écoulement (53) selon la revendication 9 ou 10, dans laquelle lesdits canaux d'écoulement des première et deuxième faces ont une même profondeur par rapport aux première et deuxième parties plates (535, 536).

12. Plaque de guidage d'écoulement (53) selon l'une quelconque des revendications précédentes, dans laquelle ladite tôle présente un axe de symétrie.

13. Pile à combustible (1) comprenant :
- des première, deuxième et troisième plaques de guidage (531, 532, 533) selon l'une quelconque des revendications précédentes ;
- des premier, deuxième et troisième assemblages membrane/électrodes (11, 12, 13) comportant chacun une membrane échangeuse de protons et une cathode et une anode fixées de part et d'autre de la membrane échangeuse de protons ;
- des première et deuxième couches de diffusion gazeuse (21) ;
- la première plaque de guidage formant une plaque bipolaire interposée entre les premier et deuxième assemblages membrane/électrodes (11, 12), la première couche de diffusion gazeuse (21) recouvrant les canaux d'écoulement de la première face de la première plaque de guidage (531) et étant en contact avec cette première face et avec l'anode du deuxième assemblage membrane/électrodes (12) ;
- les deuxième et troisième plaques de guidage (532, 533) délimitant entre elles un circuit d'écoulement (57) et formant une plaque bipolaire interposée entre les deuxième et troisième assemblages membrane/électrodes (12, 13), la première face de la deuxième plaque de guidage (532) étant en contact avec la deuxième face de la troisième plaque de guidage (533), la deuxième couche de diffusion gazeuse (21) recouvrant les canaux d'écoulement de la première face et étant en contact avec cette première face de la troisième plaque de guidage (533) et avec l'anode du troisième assemblage membrane/électrodes (13).

14. Pile à combustible selon la revendication 13, dans laquelle lesdites première à troisième plaques de guidage (531, 532, 533) sont des plaques de guidage selon la revendication 3, dans laquelle les restrictions d'écoulement (555, 556) de la première plaque de guidage (531) sont en contact avec la première couche de diffusion gazeuse (21) et dans laquelle les restrictions d'écoulement de la troisième plaque (533) de guidage sont en contact avec la deuxième couche de diffusion gazeuse (21).

15. Pile à combustible selon la revendication 13 ou 14, dans laquelle lesdites première à troisième plaques de guidage (531, 532, 533) sont traversées par des ouvertures communiquant avec ledit circuit d'écoulement (57).

16. Pile à combustible selon l'une quelconque des revendications 13 à 15, dans laquelle lesdites première à troisième plaques de guidage (531, 532, 533) présentent des géométries identiques.

## Patentansprüche

1. Strömungsführungsplatte (53) für ein Brennstoffzelle, **dadurch gekennzeichnet, dass** sie ein leitendes Blech umfasst, das ein Relief aufweist:
- welches in wechselnder Folge Strömungskanäle auf einer ersten und einer zweiten, gegenüberliegenden Seite (55, 56) des Bleches definiert, wobei zwei aufeinander folgende Strömungskanäle (553, 554) der ersten Seite (55) durch Wände (559) getrennt sind, die einen Strömungskanal (563) der zweiten Seite (56) begrenzen, wobei sich diese Strömungskanäle der ersten und der zweiten Seite entlang ein und derselben Längsrichtung erstrecken;
- welches eine erste und eine zweite Zugangsöffnung am ersten bzw. zweiten Ende jedes der Strömungskanäle (563) der zweiten Seite (56) und einer ersten Gruppe von Strömungskanälen (553) der ersten Seite definiert, wobei der Querschnitt jedes dieser Strömungskanäle zwischen seinem ersten und seinem zweiten Ende größer als der Querschnitt seiner ersten und seiner zweiten Zugangsöffnung ist;
- welches eine Strömungsbegrenzung (555, 556) in jedem Strömungskanal einer zweiten Gruppe von Strömungskanälen der ersten Seite (55) definiert, wobei der Durchflussquerschnitt an jeder dieser Strömungsbegrenzungen kleiner als der Querschnitt der Zugangsöffnungen zu den Strömungskanälen der ersten Gruppe ist, wobei die erste Seite (55) in wechselnder Folge Strömungskanäle der ersten Gruppe (553) und Strömungskanäle der zweiten Gruppe (554) aufweist.

2. Strömungsführungsplatte (53) nach Anspruch 1, wobei sich jede der Strömungsbegrenzungen (555, 556) wenigstens bis zu drei Vierteln der Tiefe der Strömungskanäle (563) der zweiten Seite erstreckt.

3. Strömungsführungsplatte (53) nach Anspruch 1 oder 2, wobei jede der Strömungsbegrenzungen (555, 556) eine Wand aufweist, die sich bis zum Boden der Strömungskanäle (563) der zweiten Seite (56) erstreckt.

4. Strömungsführungsplatte (53) nach einem der vorhergehenden Ansprüche, wobei die Strömungskanäle der ersten Gruppe und der zweiten Seite in ihrem mittleren Teil ein und denselben Querschnitt aufweisen.

5. Strömungsführungsplatte (53) nach einem der vorhergehenden Ansprüche, wobei die Strömungskanäle der ersten Gruppe und der zweiten Gruppe auf wenigstens drei Vierteln ihrer Länge ein und dieselbe Tiefe aufweisen.

6. Strömungsführungsplatte (53) nach einem der vorhergehenden Ansprüche, wobei jeder Strömungskanal der zweiten Gruppe eine Strömungsbegrenzung aufweist, die einen Durchfluss zwischen zwei Strömungskanälen der zweiten Seite begrenzt.

7. Strömungsführungsplatte (53) nach einem der vorhergehenden Ansprüche, wobei die Form einer Seite des Bleches komplementär zu der Form der anderen Seite des Bleches ist.

8. Strömungsführungsplatte (53) nach einem der vorhergehenden Ansprüche, wobei das Blech ein Blech aus Stahllegierung, aus Titanlegierung, aus Aluminiumlegierung, aus Nickellegierung oder aus Tantallegierung ist.

9. Strömungsführungsplatte (53) nach einem der vorhergehenden Ansprüche, wobei das Blech aufweist:
- einen ersten ebenen Teil (535), der sich zwischen den Zugangsöffnungen des ersten Endes der Strömungskanäle der zweiten Seite und der Strömungskanäle der ersten Gruppe erstreckt;
- einen zweiten ebenen Teil (536), der sich zwischen den Zugangsöffnungen des zweiten Endes der Strömungskanäle der zweiten Seite und der Strömungskanäle der ersten Gruppe erstreckt.

10. Strömungsführungsplatte (53) nach Anspruch 9, wobei der erste ebene Teil (535) eine erste und eine zweite Durchgangsöffnung (40, 43) aufweist und wobei der zweite ebene Teil (536) eine dritte und eine vierte Durchgangsöffnung (41, 42) aufweist.

11. Strömungsführungsplatte (53) nach Anspruch 9 oder 10, wobei die Strömungskanäle der ersten und der zweiten Seite ein und dieselbe Tiefe bezüglich des ersten und des zweiten ebenen Teils (535, 536) aufweisen.

12. Strömungsführungsplatte (53) nach einem der vorhergehenden Ansprüche, wobei das Blech eine Symmetrieachse aufweist.

13. Brennstoffzelle (1), welche umfasst:
- eine erste, eine zweite und eine dritte Führungsplatte (531, 532, 533) nach einem der vorhergehenden Ansprüche;
- eine erste, eine zweite und eine dritte Anordnung Membran/Elektroden (11, 12, 13), welche jeweils eine Protonenaustauschmembran sowie eine Kathode und eine Anode, die beiderseits der Protonenaustauschmembran befestigt sind, aufweisen;
- eine erste und eine zweite Gasdiffusionsschicht (21);
- wobei die erste Führungsplatte eine bipolare Platte bildet, die zwischen der ersten und der zweiten Anordnung Membran/Elektroden (11, 12) angeordnet ist, wobei die erste Gasdiffusionsschicht (21) die Strömungskanäle der ersten Seite der ersten Führungsplatte (531) bedeckt und sich mit dieser ersten Seite und mit der Anode der zweiten Anordnung Membran/Elektroden (12) in Kontakt befindet;
- wobei die zweite und die dritte Führungsplatte (532, 533) zwischen sich einen Strömungskreis (57) begrenzen und eine bipolare Platte bilden, die zwischen der zweiten und der dritten Anordnung Membran/Elektroden (12, 13) angeordnet ist, wobei sich die erste Seite der zweiten Führungsplatte (532) mit der zweiten Seite der dritten Führungsplatte (533) in Kontakt befindet, wobei die zweite Gasdiffusionsschicht (21) die Strömungskanäle der ersten Seite bedeckt und sich mit dieser ersten Seite der dritten Führungsplatte (533) und mit der Anode der dritten Anordnung Membran/Elektroden (13) in Kontakt befindet.

14. Brennstoffzelle nach Anspruch 13, wobei die erste bis dritte Führungsplatte (531, 532, 533) Führungsplatten nach Anspruch 3 sind, wobei die Strömungsbegrenzungen (555, 556) der ersten Führungsplatte (531) sich mit der ersten Gasdiffusionsschicht (21) in Kontakt befinden und wobei die Strömungsbegrenzungen der dritten Führungsplatte (533) sich mit der zweiten Gasdiffusionsschicht (21) in Kontakt befinden.

15. Brennstoffzelle nach Anspruch 13 oder 14, wobei die erste bis dritte Führungsplatte (531, 532, 533) von Öffnungen durchquert werden, die mit dem Strömungskreis (57) kommunizieren.

16. Brennstoffzelle nach einem der Ansprüche 13 bis 15, wobei die erste bis dritte Führungsplatte (531, 532, 533) identische Geometrien aufweisen.

## Claims

1. Flow guiding plate (53) for a fuel cell, **characterized in that** it includes a conducting sheet comprising a relief:
- defining an alternation of flow channels on opposite first and second faces (55, 56) of the sheet, two successive flow channels (553, 554) of the first face (55) being separated by walls (559) delimiting a flow channel (563) of the second face (56), said flow channels of the first and second faces extending along one and the same longitudinal direction;
- defining first and second orifices for access respectively to the first and second ends of each of the flow channels (563) of the second face (56) and of a first group of flow channels (553) of the first face, the cross section of each of these flow channels between its first and second ends being greater than the cross section of its first and second access orifices;
- defining a flow restriction (555, 556) in each flow channel of a second group of flow channels of the first face (55), the passage cross section at each of these flow restrictions being smaller than the cross section of the orifices for access to the flow channels of the first group, the first face (55) comprising an alternation of flow channels of the first group (553) and of flow channels of the second group (554).

2. Flow guiding plate (53) according to Claim 1, in which each of said flow restrictions (555, 556) extends at least as far as three quarters of the depth of the flow channels (563) of the second face.

3. Flow guiding plate (53) according to Claim 1 or 2, in which each of said flow restrictions (555, 556) includes a wall extending as far as the bottom of the flow channels (563) of the second face (56).

4. Flow guiding plate (53) according to any one of the preceding claims, in which the flow channels of the first group and of the second face exhibit one and the same cross section in their median part.

5. Flow guiding plate (53) according to any one of the preceding claims, in which the flow channels of the first group and of the second group exhibit one and the same depth over at least three quarters of their length.

6. Flow guiding plate (53) according to any one of the preceding claims, in which each flow channel of the second group comprises a flow restriction delimiting a passage between two flow channels of the second face.

7. Flow guiding plate (53) according to any one of the preceding claims, in which the shape of one face of the sheet is the complement of the shape of the other face of the sheet.

8. Flow guiding plate (53) according to any one of the preceding claims, in which said sheet is a sheet of steel alloy, of titanium alloy, of aluminum alloy, of nickel alloy or of tantalum alloy.

9. Flow guiding plate (53) according to any one of the preceding claims, in which the sheet comprises:
- a first flat part (535) extending between the access orifices of the first end of the flow channels of the second face and of the flow channels of the first group;
- a second flat part (536) extending between the access orifices of the second end of the flow channels of the second face and of the flow channels of the first group.

10. Flow guiding plate (53) according to Claim 9, in which the first flat part (535) comprises first and second traversing openings (40, 43), and in which the second flat part (536) comprises third and fourth traversing openings (41, 42).

11. Flow guiding plate (53) according to Claim 9 or 10, in which said flow channels of the first and second faces have one and the same depth with respect to the first and second flat parts (535, 536).

12. Flow guiding plate (53) according to any one of the preceding claims, in which said sheet exhibits an axis of symmetry.

13. Fuel cell (1) comprising:
- first, second and third guiding plates (531, 532, 533) according to any one of the preceding claims;
- first, second and third membrane electrode assemblies (11, 12, 13) each comprising a proton exchange membrane and a cathode and an anode which are attached on either side of the proton exchange membrane;
- first and second gas diffusion layers (21);
- the first guiding plate forming a bipolar plate interposed between the first and second membrane electrode assemblies (11, 12), the first gas diffusion layer (21) covering the flow channels of the first face of the first guiding plate (531) and being in contact with this first face and with the anode of the second membrane electrode assembly (12);
- the second and third guiding plates (532, 533) delimiting, between them, a flow circuit (57) and forming a bipolar plate interposed between the second and third membrane electrode assemblies (12, 13), the first face of the second guiding plate (532) being in contact with the second face of the third guiding plate (533), the second gas diffusion layer (21) covering the flow channels of the first face and being in contact with this first face of the third guiding plate (533) and with the anode of the third membrane electrode assembly (13).

14. Fuel cell according to Claim 13, in which said first to third guiding plates (531, 532, 533) are guiding plates according to Claim 3, in which the flow restrictions (555, 556) of the first guiding plate (531) are in contact with the first gas diffusion layer (21) and in which the flow restrictions of the third guiding plate (533) are in contact with the second gas diffusion layer (21).

15. Fuel cell according to Claim 13 or 14, in which said first to third guiding plates (531, 532, 533) are traversed by openings communicating with said flow circuit (57).

16. Fuel cell according to any one of Claims 13 to 15, in which said first to third guiding plates (531, 532, 533) exhibit identical geometries.
